# FASCICULE DE BREVET EUROPEEN

(11) **EP 0 814 369 B1**
(45) Date de publication et mention de la délivrance du brevet: **27.08.2003**
(21) Numéro de dépôt: 97440053.3
(22) Date de dépôt: 20.06.1997
(51) Int. Cl.: G03B 21/60

(54) **Dispositif de formation d'un écran d'eau susceptible de constituer un écran de projection d'images**
Wasserprojektionsvorrichtung zur Erzeugung eines Bildschirms
Device for projecting water to form an image receiving screen

(30) Priorité: 21.06.1996 FR 9607909
(43) Date de publication de la demande: 29.12.1997
(73) Titulaire: Aquatique Show International, 67100 Strasbourg (FR)
(72) Inventeur: Formhals, Dominique, 67100 Strasbourg (FR)
(74) Mandataire: Nuss, Pierre

(56) Documents cités:
- US-A- 5 067 653
- PATENT ABSTRACTS OF JAPAN vol. 95, no. 011, 26 décembre 1995 & JP 07 228098 A (SHIMIZU CORP), 29 août 1995,
- PATENT ABSTRACTS OF JAPAN vol. 96, no. 005, 31 mai 1996 & JP 08 015777 A (ISHIKAWAJIMA HARIMA HEAVY IND CO LTD), 19 janvier 1996,
- PATENT ABSTRACTS OF JAPAN vol. 009, no. 054 (P-340), 8 mars 1985 & JP 59 192237 A (YOSHIKO KAWAMURA;OTHERS: 01), 31 octobre 1984,
- PATENT ABSTRACTS OF JAPAN vol. 96, no. 006, 28 juin 1996 & JP 08 036223 A (HITACHI LTD), 6 février 1996,
- PATENT ABSTRACTS OF JAPAN vol. 017, no. 308 (P-1555), 11 juin 1993 & JP 05 027695 A (EBARA CORP), 5 février 1993,

## Description

La présente invention concerne les domaines des loisirs, des spectacles, de la publicité et de la communication, et notamment, par exemple, les parcs de loisirs, les spectacles de sons et lumières, les théâtres d'eau et les concerts.

Elle a pour objet un dispositif de génération ou de formation d'un écran d'eau vertical permanent et quasi-continu, susceptible de constituer un écran de rétroprojection ou de projection par transparence, notamment pour la projection d'images animées du type cinéma, pour la vidéo projection, pour la projection laser, pour la projection vidéo-laser ou pour la projection de diapositives.

On connaît déjà différents dispositifs capables de former des écrans constitués soit de rideaux de jets d'eau verticaux alignés, issus de buses disposées côte à côte et dirigés vers le haut ou vers le bas (voir par exemple US-A-4 974 779 ou US-A-5 067 653), soit d'un jet d'eau en éventail, obtenu par impact d'un jet d'eau concentré sur une plaque d'éclatement et dispersion semi-circulaire dudit jet avec formation d'une lame d'eau ou éventail (voir par exemple FR-A-2 665 287).

Toutefois, ces dispositifs connus présentent un certain nombre de limitations et d'inconvénients.

Ainsi, les dispositifs formant des écrans d'eau par projection vers le haut ne peuvent, du fait de l'action de la pesanteur, aboutir qu'à des écrans de taille limitée, les gouttelettes d'eau qui retombent pouvant en outre perturber l'intégrité structurelle et l'uniformité de l'écran.

De plus, l'écran obtenu au moyen du dispositif précité à plaque d'éclatement présente naturellement une forme de demi-disque, qui est moins avantageuse en terme de surface efficace de projection qu'une surface carrée ou rectangulaire.

En outre, les dispositifs à buses ne permettent pas, du fait de l'encombrement important de chaque buse et de la faible valeur résultante du rapport (largeur des jets / écartement entre deux jets adjacents), d'obtenir une surface d'eau à structure suffisamment continue, qui permettrait d'aboutir à une image projetée et restituée de bonne qualité, et présentant une résolution acceptable.

En effet, même en disposant lesdites buses en contact les unes avez les autres et sur plusieurs rangées parallèles et décalées entre elles, on aboutit toujours à une image discontinue, voire déformée, du fait des vides importants entre les jets ou des décalages en profondeurs importants entre lesdits jets.

Par ailleurs, les dispositifs à buses nécessitent un entretien constant et, fréquemment, des démontages et remontages fastidieux pour nettoyer ou interchanger une ou plusieurs buses, le prix de revient de ces dispositifs étant également très élevé.

Enfin, les différents dispositifs connus précités nécessitent tous la génération d'un flux d'eau important sous très forte pression pour pouvoir former un écran présentant une bonne intégrité structurelle.

Cette forte pression d'éjection de l'eau aboutit à une atomisation partielle de celle-ci, pouvant générer, notamment dans des espaces fermés, du brouillard ou de la brume formé(e) de micro-gouttellettes en suspension dans l'air, ainsi que des courants d'air induits par les remous créés par les jets d'eau sous forte pression.

Autres dispositifs sont connus par JP-A-07 228 098 et JP-A-59 192 237.

La présente invention a notamment pour objet de pallier l'ensemble des inconvénients précités.

A cet effet, elle a pour objet un dispositif de formation d'un écran d'eau (ou d'un liquide transparent ou translucide, coloré ou non, analogue) vertical susceptible de constituer un écran de réception et de restitution d'images projetées, notamment par rétroprojection, essentiellement constitué par un élément supérieur allongé générant une pluralité de jets d'eau, alignés sur au moins une rangée longitudinale, par un circuit d'alimentation dudit élément en eau sous pression et par une unité de circulation forcée de l'eau, caractérisé en ce que l'élément supérieur allongé comprend un corps creux relié au circuit d'alimentation et fermé dans sa partie inférieure par une plaque, ou plusieurs portions de plaque, pourvue(s) de perforations traversantes alignées sur au moins deux rangées rectilignes longitudinales, ladite plaque ou lesdites portions de plaque étant fixée(s) de manière amovible au niveau d'une ouverture longitudinale inférieure du corps creux et présentant, au niveau des perforations au moins, une épaisseur supérieure à une valeur seuil inférieure.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique d'un dispositif selon l'invention ;
la figure 2 est une vue en élévation latérale et en coupe selon A-A de l'élément supérieur allongé ;
la figure 3 est une vue selon la direction F du détail B de la figure 1, et,
la figure 4 est une vue en élévation latérale et en coupe partielle selon A-A' du détail représenté sur la figure 3.

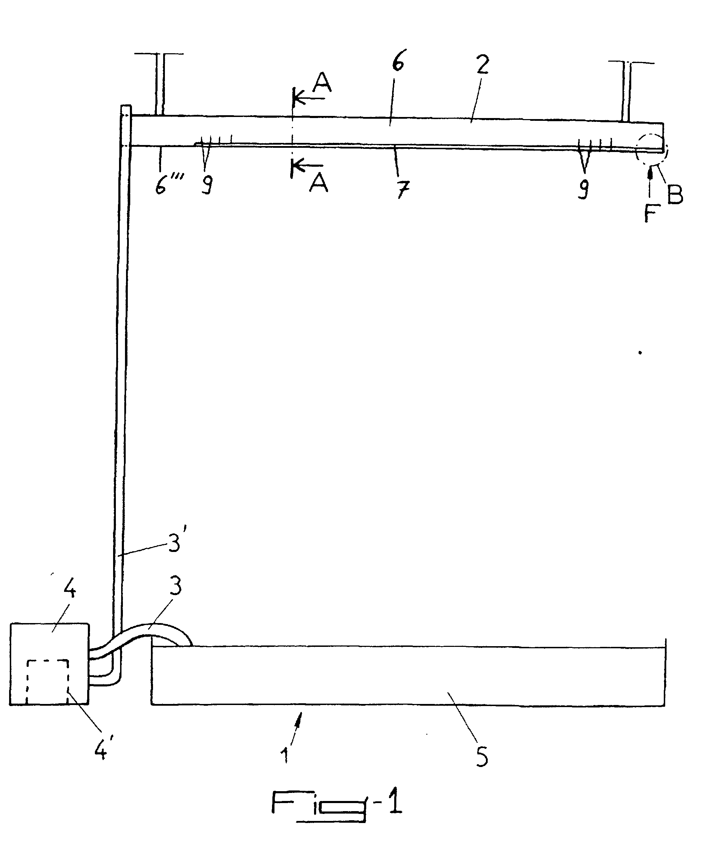

Comme le montre la figures 1 des dessins annexés, le dispositif 1 de formation d'un écran d'eau vertical, susceptible de constituer un écran de réception et de restitution d'images projetées par projection directe ou rétroprojection, est essentiellement constitué par un élément supérieur allongé 2 générant une pluralité de jets d'eau dirigés vers le bas et alignés sur au moins une rangée R1, R2, R3 longitudinale, par un circuit 3, 3' d'alimentation dudit élément 2 en eau sous pression et par une unité 4 de circulation forcée de l'eau, laquelle aspire l'eau au moyen d'un premier tuyau 3 dans un bassin ou réservoir de récupération 5 disposé sous l'élément supérieur allongé 2 et envoie l'eau aspirée dans ledit élément supérieur allongé 2 par l'intermédiaire d'un second tuyau 3'.

Conformément à l'invention, l'élément supérieur allongé 2 comprend un corps creux 6 relié au circuit d'alimentation 3, 3' et fermé dans sa partie inférieure par une plaque 7, ou plusieurs portions de plaque, pourvue(s) de perforations traversantes 8 alignées sur au moins deux rangées rectilignes longitudinales R1, R2, R3, ladite plaque 7 ou lesdites portions de plaque étant fixée(s) de manière amovible au niveau d'une ouverture longitudinale inférieure 6' du corps creux 6 et présentant, au niveau des perforations 8 au moins, une épaisseur (e) supérieure à une valeur seuil inférieure.

Grâce aux dispositions ci-dessus, il est possible d'obtenir des jets d'eau très rapprochés, améliorant sensiblement la continuité de l'écran formé, de réaliser un écran de grande taille avec une pression d'eau injectée peu élevée (la projection se faisant dans le sens de l'action de la pesanteur), d'aboutir à un prix de revient du dispositif 1 faible par rapport à un dispositif à buses et de rendre les opérations de maintenance et d'entretien rapides et aisées.

Selon un mode de réalisation préféré de l'invention, l'épaisseur e de la plaque perforée 7 est supérieure à environ 6 mm, préférentiellement supérieure ou égale à 8 mm, les perforations traversantes circulaires 8 présentent un diamètre compris entre 1,0 mm et 1,4 mm, préférentiellement de l'ordre de 1,2 mm, et lesdites perforations traversantes 8 d'une même rangée longitudinale R1, R2, R3 sont espacées d'une distance d comprise entre 3,5 mm et 4,5 mm, préférentiellement d'environ 4,0 mm.

La prévision d'une épaisseur minimale pour la plaque 7 permet de garantir une longueur des passages des perforations suffisante pour aboutir à une canalisation et une focalisation de l'eau sous forme de jets conservant leur intégrité structurelle le plus longtemps possible et évitant leur dispersion et leur interférence avec les jets voisins.

A ce sujet, il a été constaté, en outre, que la sélection simultanée des valeurs précitées de diamètre des perforations et de distance d entre jets permet d'aboutir au meilleur compromis entre une bonne continuité structurelle de l'écran formé et une absence d'interférence entre jets voisins sur une grande longueur verticale.

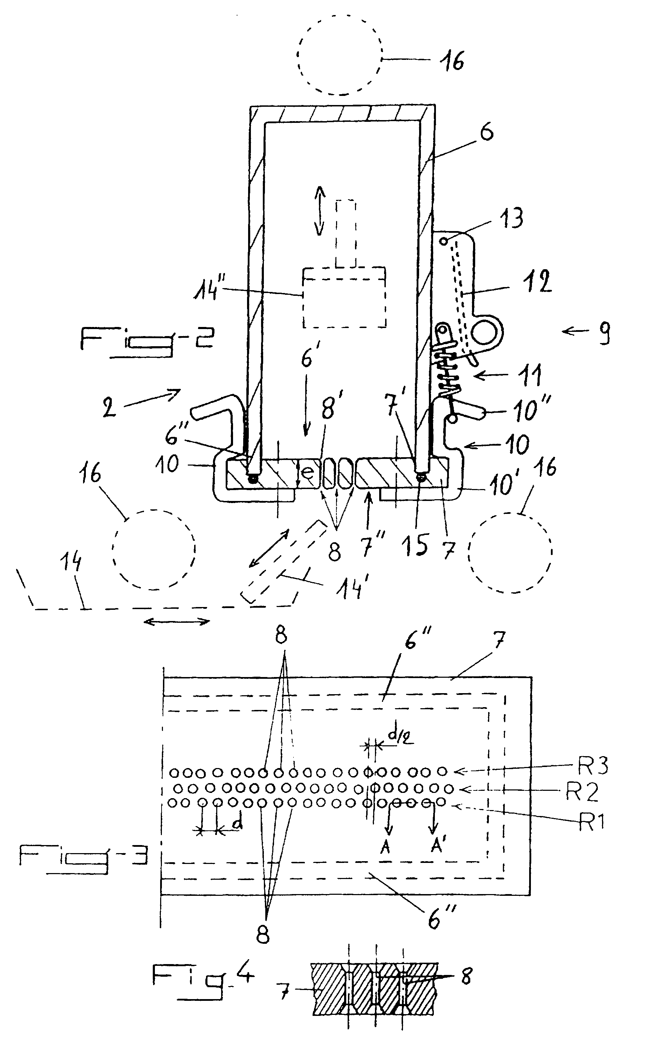

La formation des jets d'eau peut, en outre, être favorisée en prévoyant pour les perforations traversantes 8, au niveau de leurs deux extrémités, des chanfreins 8', par exemple du type présentant un angle d'environ 60° et une profondeur d'environ 1,5 mm (voir figure 4).

Conformément à une première variante de réalisation de l'invention, représentée aux dessins annexés, les perforations traversantes 8 sont disposées sur deux rangées longitudinales parallèles espacées de 3 à 5 mm, préférentiellement d'environ 4 mm, lesdites rangées étant décalées longitudinalement l'une par rapport à l'autre de la moitié de la distance d séparant deux perforations 8 voisines d'une même rangée.

Conformément à une seconde variante de réalisation de l'invention, représentée aux figures 2 et 3 des dessins annexés, les perforations traversantes 8 sont disposées sur trois rangées longitudinales parallèles R1, R2 et R3 espacées mutuellement de 3 mm à 5 mm les unes des autres, préférentiellement d'environ 4 mm, les perforations 8 des deux rangées extérieures R1 et R3 étant disposées symétriquement par rapport à l'axe de la rangée intérieure médiane R2 et les perforations 8 constituant cette dernière étant décalées longitudinalement par rapport aux perforations 8 formant les deux rangées extérieures R1 et R3, de la moitié de la distance d de séparation de deux perforations 8 voisines d'une même rangée, aboutissant de ce fait à une disposition en quinconce desdites perforations 8.

Cette disposition particulière des perforations traversantes 8 aboutit à une structure symétrique de l'écran formé par les jets d'eau en chute libre issus desdites perforations et permet, par conséquent, une utilisation réversible de ce dernier, c'est-à-dire une projection sur les deux faces dudit écran, notamment de manière alternée. De plus, la réalisation des ajutages de génération des jets d'eau sous forme de perforations 8 permet non seulement un rapprochement entre eux des jets d'une même rangée, mais également des rangées entre elles, d'où il résulte une meilleure planéité de l'écran résultant et une plus faible distorsion de l'image restituée (par rétroprojection, il faut comprendre une projection dans laquelle l'appareil de projection d'images est situé à l'opposé des spectateurs par rapport à l'écran d'eau formé).

Ces qualités exceptionnelles de continuité, de planéité, d'uniformité et de stabilité de l'écran d'eau obtenu grâce au dispositif 1 selon l'invention, autorisent une projection d'images par l'un quelconque des moyens ou des modes de projection cités précédemment et aboutissent à une image restituée au niveau dudit écran transparent, de très bonne qualité en termes de résolution, de reproduction des détails et de d'absence de distorsion.

Comme le montre la figure 2 des dessins annexés, et selon un mode préférentiel de réalisation de l'invention, le corps creux 6 présente une structure profilée à section transversale en forme de U, dont les extrémités 6" des ailes longitudinales s'emboîtent dans deux rainures 7' correspondantes ménagées dans la plaque perforée 7 fermant son ouverture inférieure 6', ladite plaque 7 étant maintenue appliquée contre et emboîtée sur lesdites extrémités 6" des ailes du corps creux 6 sous l'action d'une pluralité d'ensembles de blocage 9 à verrouillage et déverrouillage rapides montés, de manière espacée, sur les deux ailes latérales longitudinales du corps creux 6.

Afin de réaliser une étanchéité suffisante entre le corps creux 6 et la plaque 7, les rainures 7' de la plaque perforée 7 recevant les extrémités 6" des ailes du corps creux 6 profilé en U comportent chacune un joint à compression 15, notamment du type torique, disposé au fond desdites rainures 7'.

Plus précisément, chaque ensemble de blocage 9 peut comporter essentiellement, d'une part, un pièce d'attache 10 sensiblement en forme de S ou de Z, dont le crochet inférieur 10' vient en prise sur la face inférieure 7" et au niveau d'un bord latéral de la plaque perforée 7 et dont le crochet supérieur 10", tourné vers l'extérieur, est en prise avec la partie inférieure d'un élément de traction 11 au moins partiellement élastique, et, d'autre part, un levier de commande 12 solidaire d'une came de manoeuvre excentrique, pouvant pivoter autour d'un axe de pivotement 13 fixe par rapport au corps creux 6 et reliée à la partie supérieure de l'élément de traction 11.

De manière avantageuse, la came de manoeuvre excentrique peut être configurée et orientée de telle manière que l'effort de traction maximum soit atteint avant que le levier de commande 12 ne parvienne dans sa position de verrouillage (figure 2), ce dernier étant ainsi automatiquement maintenu dans cette dernière position et un effort extérieur étant nécessaire pour l'en extraire.

Comme le montre la figure 2 des dessins annexés, l'axe de pivotement 13 du levier de commande 12 et de la came de manoeuvre est monté dans une console support fixée sur une aile du corps creux 6, dans laquelle ledit levier de commande est escamoté en position de verrouillage et qui comporte un moyen de blocage de ce dernier en position verrouillée.

Afin d'assurer une alimentation continue et non perturbée des perforations traversantes 8, il est avantageusement prévu que le corps creux 6 comporte, à proximité de la zone d'injection de l'eau sous pression délivrée par le circuit d'alimentation 3, 3', un segment 6'" pourvu d'une partie inférieure ou d'un fond non perforé(e), formant une portion profilée à section rectangulaire.

En vue de réaliser un établissement et une coupure nets de l'écran d'eau, le dispositif 1 peut comporter un moyen mobile 14, 14', 14" d'obturation des perforations 8 ou de récupération de l'eau éjectée par ces dernières, pouvant être déplacé entre une position escamotée inactive dans laquelle l'eau est éjectée par les perforations traversantes 8 de la plaque perforée 7 et peut tomber librement et une position active dans laquelle ledit moyen mobile 14 obture les perforations traversantes 8 ou est disposée sensiblement sous la plaque perforée 7 et récupère toute l'eau éjectée par les perforations 8 de cette dernière (figure 2 des dessins annexés).

Conformément à une première variante de réalisation de l'invention, le moyen mobile peut être constitué par une gouttière 14 montée avec faculté de pivotement et/ou de translation sur l'un des longerons 16 de la structure support de l'élément supérieur 2 et être déplacé par l'intermédiaire de moyens d'actionnement adéquats (par exemple du type vérins).

Selon une deuxième variante de réalisation de l'invention, le moyen mobile se présente sous la forme d'une plaque allongée ou d'une lame 14' s'étendant sur toute la longueur de la plaque perforée 7 et déviant dans sa position active la totalité de l'eau déversée par les perforations 8 vers une gouttière d'évacuation fixe 14.

Conformément à une troisième variante de réalisation de l'invention, le moyen mobile consiste en un élément d'obturation étanche 14" de forme allongée, disposé dans le corps creux 6 et s'étendant sur toute la longueur de la plaque perforée 7, ledit élément d'obturation étanche 14" pouvant être appliqué intimement contre la face interne de ladite plaque perforée 7 en obturant ainsi les perforations 8.

Ledit élément d'obturation 14" pourra par exemple se présenter sous la forme d'un boudin en néoprène (marque déposée) ou en un matériau d'étanchéité élastique analogue, monté sur une tringlerie actionnée par un vérin.

Selon une caractéristique supplémentaire de l'invention, l'unité 4 de circulation forcée et d'alimentation en eau sous pression comporte, outre un module pompe / surpresseur, un filtre 4' retenant les particules de diamètre supérieur à 0,5 mm, ce qui évite toute obstruction des perforations traversantes 8.

Il convient de noter que pour générer des jets d'eau de qualité suffisante pour créer un écran d'eau de relativement bonne qualité, une pression d'alimentation de 1 bar au niveau du corps creux 6 est suffisante, ce qui est nettement inférieur aux pressions nécessaires dans les dispositifs précités de l'art antérieur.

Cette faible pression d'éjection, qui est possible du fait de l'orientation vers le bas des jets d'eau, permet, en outre, d'éviter la génération de brumes ou de brouillards, ou encore de remous d'air importants, ce qui rend le dispositif 1 particulièrement adapté pour une utilisation intérieure.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de formation d'un écran d'eau vertical susceptible de constituer un écran de réception et de restitution d'images projetées, notamment par rétroprojection, essentiellement constitué par un élément supérieur allongé générant une pluralité de jets d'eau, alignés sur au moins une rangée longitudinale, par un circuit d'alimentation dudit élément en eau sous pression et par une unité de circulation forcée de l'eau, **caractérisé en ce que** l'élément supérieur allongé (2) comprend un corps creux (6) relié au circuit d'alimentation (3, 3') et fermé dans sa partie inférieure par une plaque (7), ou plusieurs portions de plaque, pourvue(s) de perforations traversantes (8) alignées sur au moins deux rangées rectilignes longitudinales (R1, R2, R3), ladite plaque (7) ou lesdites portions de plaque étant fixée(s) de manière amovible au niveau d'une ouverture longitudinale inférieure (6') du corps creux (6) et présentant, au niveau des perforations (8) au moins, une épaisseur (e) supérieure à une valeur seuil inférieure.

2. Dispositif selon la revendication 1, **caractérisé en ce que** l'épaisseur (e) est supérieure à environ 6 mm, préférentiellement supérieure ou égale à 8 mm, **en ce que** les perforations traversantes circulaires (8) présentent un diamètre compris entre 1,0 mm et 1,4 mm, préférentiellement de l'ordre de 1,2 mm, et **en ce que** lesdites perforations traversantes (8) d'une même rangée longitudinale (R1, R2, R3) sont espacées d'une distance (d) comprise entre 3,5 mm et 4,5 mm, préférentiellement d'environ 4,0 mm.

3. Dispositif selon la revendication 2, **caractérisé en ce que** les perforations traversantes (8) sont disposées sur deux rangées longitudinales parallèles espacées de 3 à 5 mm, préférentiellement d'environ 4 mm, lesdites rangées étant décalées longitudinalement l'une par rapport à l'autre de la moitié de la distance (d) séparant deux perforations (8) voisines d'une même rangée.

4. Dispositif selon la revendication 2, **caractérisé en ce que** les perforations traversantes (8) sont disposées sur trois rangées longitudinales parallèles (R1, R2, R3) espacées mutuellement de 3 à 5 mm les unes des autres, préférentiellement d'environ 4 mm, les perforations (8) des deux rangées extérieures (R1 et R3) étant disposées symétriquement par rapport à l'axe de la rangée intérieure médiane (R2) et les perforations (8) constituant cette dernière étant décalées longitudinalement par rapport aux perforations (8) formant les deux rangées extérieures (R1 et R3), de la moitié de la distance (d) de séparation de deux perforations (8) voisines d'une même rangée.

5. Dispositif selon l'une quelconque des revendications 1 à 4, **caractérisé en ce que** le corps creux (6) présente une structure profilée à section transversale en forme de U, dont les extrémités (6") des ailes longitudinales s'emboîtent dans deux rainures (7') correspondantes ménagées dans la plaque perforée (7) fermant son ouverture inférieure (6'), ladite plaque (7) étant maintenue appliquée contre et emboîtée sur lesdites extrémités (6") des ailes du corps creux (6) sous l'action d'une pluralité d'ensembles de blocage (9) à verrouillage et déverrouillage rapides montés, de manière espacée, sur les deux ailes latérales longitudinales du corps creux (6).

6. Dispositif selon la revendication 5, **caractérisé en ce que** chaque ensemble de blocage (9) comporte essentiellement, d'une part, un pièce d'attache (10) sensiblement en forme de S ou de Z, dont le crochet inférieur (10') vient en prise sur la face inférieure (7") et au niveau d'un bord latéral de la plaque perforée (7) et dont le crochet supérieur (10"), tourné vers l'extérieur, est en prise avec la partie inférieure d'un élément de traction (11) au moins partiellement élastique, et, d'autre part, un levier de commande (12) solidaire d'une came de manoeuvre excentrique, pouvant pivoter autour d'un axe de pivotement (13) fixe par rapport au corps creux (6) et reliée à la partie supérieure de l'élément de traction (11).

7. Dispositif selon l'une quelconque des revendications 5 et 6, **caractérisé en ce que** le corps creux (6) comporte, à proximité de la zone d'injection de l'eau sous pression délivrée par le circuit d'alimentation (3, 3'), un segment (6"') pourvu d'une partie inférieure ou d'un fond non perforé(e), formant une portion profilée à section rectangulaire.

8. Dispositif selon l'une quelconque des revendications 1 à 7, **caractérisé en ce qu'**il comporte un moyen mobile (14, 14', 14") pouvant être déplacé entre une position escamotée inactive dans laquelle l'eau éjectée par les perforations traversantes (8) de la plaque perforée (7) peut tomber librement et une position active dans laquelle elle est disposée sensiblement sous la plaque perforée (7) et récupère toute l'eau éjectée par les perforations traversantes (8) de cette dernière.

9. Dispositif selon la revendication 8, **caractérisé en ce que** le moyen mobile est constitué par une gouttière (14) montée avec faculté de pivotement et/ou de translation sur l'un des longerons (16) de la structure support de l'élément supérieur (2).

10. Dispositif selon la revendication 8, **caractérisé en ce que** le moyen mobile se présente sous la forme d'une plaque allongée ou d'une lame (14') s'étendant sur toute la longueur de la plaque perforée (7) et déviant, dans sa position active, la totalité de l'eau déversée par les perforations (8) vers une gouttière d'évacuation fixe (14).

11. Dispositif selon la revendication 8, **caractérisé en ce que** le moyen mobile consiste en un élément d'obturation étanche (14") de forme allongée, disposé dans le corps creux (6) et s'étendant sur toute la longueur de la plaque perforée (7), ledit élément d'obturation étanche (14") pouvant être appliqué intimement contre la face interne de ladite plaque perforée (7) en obturant ainsi les perforations (8).

12. Dispositif selon l'une quelconque des revendications 5 à 11, **caractérisé en ce que** les rainures (7') de la plaque perforée (7) recevant les extrémités (6") des ailes du corps creux (6) profilé en U comportent chacune un joint à compression (15), notamment du type torique, disposé au fond desdites rainures (7'), et **en ce que** les perforations traversantes (8) sont munies, à leurs deux extrémités, de chanfreins (8'), par exemple du type présentant un angle de 60° et une profondeur de 1,5 mm.

13. Dispositif selon l'une quelconque des revendications 1 à 12, **caractérisé en ce que** l'unité (4) de circulation forcée et d'alimentation en eau sous pression comporte, outre un module pompe / surpresseur, un filtre (4') retenant les particules de diamètre supérieur à 0,5 mm.

## Patentansprüche

1. Vorrichtung (1) zur Erzeugung eines vertikalen Wasserbildschirms, der einen Bildschirm zum Empfang und zur Wiedergabe von projizierten Bildern bilden kann, insbesondere durch Rückwärtsprojektion, welche im Wesentlichen aus einem oberen länglichen Element, das eine Vielzahl von Wasserstrahlen erzeugt, die auf mindestens eine Längsreihe ausgerichtet sind, aus einem Kreislauf zur Versorgung des Elements mit Wasser unter Druck und aus einer Einheit zur erzwungenen Zirkulation des Wassers besteht, **dadurch gekennzeichnet, dass** das obere längliche Element (2) einen Hohlkörper (6) umfasst, der mit dem Versorgungskreislauf (3, 3') verbunden ist und an seinem unteren Teil mit einer Platte (7) oder mehreren Plattenteilen verschlossen ist, die mit Durchgangsperforationen (8) versehen ist (sind), die auf zumindest zwei geradlinige Längsreihen (R1, R2, R3) ausgerichtet sind, wobei die Platte (7) oder die Plattenteile in abnehmbarer Weise auf der Höhe einer unteren Längsöffnung (6') des Hohlkörpers (6) befestigt ist (sind) und auf der Höhe der Perforationen (8) zumindest eine Dicke (e) aufweist (aufweisen), die größer ist als ein unterer Schwellenwert.

2. Vorrichtung nach Anspruch 1, **dadurch gekennzeichnet, dass** die Dicke (e) größer ist als ungefähr 6 mm, vorzugsweise größer als oder gleich 8 mm, dass die kreisförmigen Durchgangsperforationen (8) einen Durchmesser zwischen 1,0 mm und 1,4 mm, vorzugsweise in der Größenordnung von 1,2 mm aufweisen, und dass die Durchgangsperforationen (8) ein und derselben Längsreihe (R1, R2, R3) um einem Abstand (d) zwischen 3,5 mm und 4,5 mm, vorzugsweise von ungefähr 4,0 mm beabstandet sind.

3. Vorrichtung nach Anspruch 2, **dadurch gekennzeichnet, dass** die Durchgangsperforationen (8) in zwei parallelen Längsreihen angeordnet sind, die um 3 bis 5 mm, vorzugsweise ungefähr 4 mm beabstandet sind, wobei die Reihen der Länge nach um die Hälfte des Abstands (d), der zwei benachbarte Perforationen (8) ein und derselben Reihe trennt, gegeneinander versetzt sind.

4. Vorrichtung nach Anspruch 2, **dadurch gekennzeichnet, dass** die Durchgangsperforationen (8) in drei parallelen Längsreihen (R1, R2, R3) angeordnet sind, die gegenseitig um 3 bis 5 mm, vorzugsweise ungefähr 4 mm voneinander beabstandet sind, wobei die Perforationen (8) der zwei äußeren Reihen (R1 und R3) symmetrisch bezüglich der Achse der mittleren inneren Reihe (R2) angeordnet sind und die Perforationen (8), die diese letztere bilden, der Länge nach bezüglich der Perforationen (8), die die zwei äußeren Reihen (R1 und R3) bilden, um die Hälfte des Trennabstands (d) von zwei benachbarten Perforationen (8) ein und derselben Reihe versetzt sind.

5. Vorrichtung nach einem der Ansprüche 1 bis 4, **dadurch gekennzeichnet, dass** der Hohlkörper (6) eine profilierte Struktur mit U-förmigem Querschnitt aufweist, deren Enden (6") der Längsflügel in zwei entsprechende Nuten (7') passen, die in der perforierten Platte (7) ausgebildet sind, welche seine untere Öffnung (6') schließt, wobei die Platte (7) unter der Wirkung einer Vielzahl von Blockierungsbaugruppen (9) zur schnellen Verriegelung und Entriegelung, die in beabstandeter Weise an den zwei seitlichen Längsflügeln des Hohlkörpers (6) montiert sind, an die Enden (6") der Flügel des Hohlkörpers (6) angelegt und an diese angefügt gehalten wird.

6. Vorrichtung nach Anspruch 5, **dadurch gekennzeichnet, dass** jede Blockierungsbaugruppe (9) im Wesentlichen einerseits ein im Wesentlichen S- oder Z-förmiges Verbindungsstück (10), dessen unterer Haken (10') an der unteren Seite (7") und auf der Höhe eines seitlichen Randes der perforierten Platte (7) in Eingriff kommt und dessen oberer Haken (10"), der nach außen gerichtet ist, mit dem unteren Teil eines Zugelements (11), das zumindest teilweise elastisch ist, in Eingriff steht, und andererseits einen Steuerhebel (12), der mit einer exzentrischen Steuernocke fest verbunden ist, welche sich um eine Drehachse (13) drehen kann, die bezüglich des Hohlkörpers (6) fest ist, und welche mit dem oberen Teil des Zugelements (11) verbunden ist, umfasst.

7. Vorrichtung nach einem der Ansprüche 5 und 6, **dadurch gekennzeichnet, dass** der Hohlkörper (6) in der Nähe der Einspritzzone des Wassers unter Druck, das vom Versorgungskreislauf (3, 3') geliefert wird, ein Segment (6"') umfasst, das mit einem unperforierten unteren Teil oder Boden versehen ist, der einen profilierten Teil mit rechteckigem Querschnitt bildet.

8. Vorrichtung nach einem der Ansprüche 1 bis 7, **dadurch gekennzeichnet, dass** sie ein bewegliches Mittel (14, 14', 14") umfasst, das zwischen einer inaktiven eingezogenen Position, in der das durch die Durchgangsperforationen (8) der perforierten Platte (7) ausgespritzte Wasser frei fallen kann, und einer aktiven Position verschoben werden kann, in der es im Wesentlichen unter der perforierten Platte (7) angeordnet ist und das ganze durch die Durchgangsperforationen (8) ausgespritzte Wasser zurückgewinnt.

9. Vorrichtung nach Anspruch 8, **dadurch gekennzeichnet, dass** das bewegliche Mittel aus einer Rinne (14) besteht, die mit Dreh- und/oder Verschiebungsfähigkeit an einem der Holme (16) der Stützstruktur des oberen Elements (2) montiert ist.

10. Vorrichtung nach Anspruch 8, **dadurch gekennzeichnet, dass** das bewegliche Mittel in Form einer länglichen Platte oder einer Lamelle (14') vorliegt, die sich auf der gesamten Länge der perforierten Platte (7) erstreckt und in ihrer aktiven Position die Gesamtheit des durch die Perforationen (8) gegossenen Wassers in eine feste Ablaufrinne (14) ablenkt.

11. Vorrichtung nach Anspruch 8, **dadurch gekennzeichnet, dass** das bewegliche Mittel aus einem dichten Verschlusselement (14") mit länglicher Form besteht, das im Hohlkörper (6) angeordnet ist und sich auf der gesamten Länge der perforierten Platte (7) erstreckt, wobei das dichte Verschlusselement (14") innig an die Innenseite der perforierten Platte (7) angelegt werden kann, wobei somit die Perforationen (8) verschlossen werden.

12. Vorrichtung nach einem der Ansprüche 5 bis 11, **dadurch gekennzeichnet, dass** die Nuten (7') der perforierten Platte (7), die die Enden (6") der Flügel des Hohlkörpers (6) mit U-Profil aufnehmen, jeweils eine Druckdichtung (15), insbesondere vom torischen Typ, umfassen, die am Boden der Nuten (7') angeordnet ist, und dass die Durchgangsperforationen (8) an ihren zwei Enden mit Fasen (8') versehen sind, beispielsweise vom Typ, der einen Winkel von 60° und eine Tiefe von 1,5 mm aufweist.

13. Vorrichtung nach einem der Ansprüche 1 bis 12, **dadurch gekennzeichnet, dass** die Einheit (4) zur erzwungenen Zirkulation und zur Versorgung mit Wasser unter Druck außer einem Pumpen/Aufladegebläse-Modul einen Filter (4') umfasst, der die Teilchen mit einem größeren Durchmesser als 0,5 mm zurückhält.

## Claims

1. Device (1) for the formation of a vertical water screen capable of constituting a screen for receiving and reproducing projected images, in particular by overhead projection, substantially consisting of an elongate upper element generating a plurality of water jets, aligned in at least one longitudinal row, by means of a circuit for supplying said element with pressurised water and of a unit for the forced circulation of water, **characterised in that** the elongate upper element (2) comprises a hollow body (6) connected to the supply circuit (3, 3') and closed, in its lower portion, by a plate (7) or a plurality of plate portions, provided with through-perforations (8) aligned in at least two longitudinal straight rows (R1, R2, R3), said plate (7) or said plate portions being fixed in a detachable manner in the region of a lower longitudinal opening (6') of the hollow body (6) and having a thickness (e) at least in the region of the perforations (8) which is greater than a lower threshold value.

2. Device according to claim 1, **characterised in that** the thickness (e) is greater than about 6 mm, preferably greater than or equal to 8 mm **in that** the circular through-perforations (8) have a diameter of between 1.0 mm and 1.4 mm, preferably about 1.2 mm, and **in that** said through-perforations (8) in the same longitudinal row (R1, R2, R3) are spaced by a distance (d) of between 3.5 mm and 4.5 mm, preferably about 4.0 mm.

3. Device according to claim 2, **characterised in that** the through-perforations (8) are disposed in two parallel longitudinal rows spaced by 3 to 5 mm, preferably about 4 mm, said rows being longitudinally offset with respect to one another by half the distance (d) separating two adjacent perforations (8) in the same row.

4. Device according to claim 2, **characterised in that** the through-perforations (8) are disposed over three parallel longitudinal rows (R1, R2, R3) mutually spaced by 3 to 5 mm from one another, preferably by about 4 mm, the perforations (8) of the two external rows (R1 and R3) being disposed symmetrically about the axis of the median internal row (R2) and the perforations (8) constituting this latter row (R2) being longitudinally offset from the perforations (8) forming the two external rows (R1 and R3), by half the distance (d) separating two adjacent perforations (8) in the same row.

5. Device according to any one of claims 1 to 4, **characterised in that** the hollow body (6) has a profiled structure with a U-shaped cross-section, of which the ends (6") of the longitudinal sides fit in two corresponding grooves (7') produced in the perforated plate (7) closing its lower opening (6'), said plate (7) being kept applied against and fitted on said ends (6") of the sides of the hollow body (6) by the action of a plurality of blocking assemblies (9) for rapid locking and unlocking, mounted in a spaced manner on the two longitudinal lateral sides of the hollow body (6).

6. Device according to claim 5, **characterised in that** each blocking assembly (9) substantially comprises, on the one hand, a fastening part (10) substantially in the shape of an S or Z, of which the lower hook (10") engages on the lower face (7") and in the region of a lateral edge of the perforated plate (7) and of which the upper hook (10'), turned toward the exterior, engages with the lower part of a traction element (11) which is at least partially resilient and, on the other hand, a control lever (12) which is integral with an eccentric operating cam, which can pivot about the pivot axis (13) which is fixed with respect to the hollow body (6) and connected to the upper portion of the traction element (11).

7. Device according to any one of claims 5 and 6, **characterised in that** the hollow body (6) comprises, close to the zone for injecting pressurised water delivered by the supply circuit (3, 3'), a segment (6"') provided with a lower portion or a non-perforated base, forming a profiled portion with a rectangular section.

8. Device according to any one of claims 1 to 7, **characterised in that** it comprises a movable means (14, 14', 14") which can be displaced between an inactive retracted position in which the water ejected by the through-perforations (8) of the perforated plate (7) can fall freely and an active position in which it is disposed substantially below the perforated plate (7) and recovers all the water ejected via the through-perforations (8) of the plate (7).

9. Device according to claim 8, **characterised in that** the movable means consists of a spout (14) mounted with a capacity for pivoting and/or translation on one of the beams (16) of the support structure for the upper element (2).

10. Device according to claim 8, **characterised in that** the movable means is in the form of an elongate plate or a strip (14') extending over the entire length of the perforated plate (7) and, in its active position, diverting all the water poured through the perforations (8) towards a fixed discharge spout (14).

11. Device according to claim 8, **characterised in that** the movable means consists of a tight sealing element (14") of elongate shape, disposed in the hollow body (6) and extending over the entire length of the perforated plate (7), said tight sealing element (14") being adapted to be applied closely against the internal face of said perforated plate (7), thus sealing the perforations (8).

12. Device according to any one of claims 5 to 11, **characterised in that** the grooves (7') of the perforated plate (7) receiving the ends (6") of the sides of the hollow body (6) which is profiled in a U-shape each comprise a compression joint (15), in particular of the O ring type, disposed at the base of said grooves (7') and **in that** the through-perforations (8) are provided at their two ends, with chamfers (8'), for example of the type with a 60° angle and a depth of 1.5 mm.

13. Device according to any one of claims 1 to 12, **characterised in that** the unit (4) for forced circulation and for supply of pressurised water, apart from a pump/booster module, comprises a filter (4') which retains the particles with a diameter greater than 0.5 mm.
